# EUROPEAN PATENT APPLICATION

(11) **EP 4 765 539 A1**
(43) Date of publication of application: **24.06.2026**
(21) Application number: 25213208.9
(22) Date of filing: 04.11.2025
(51) Int. Cl.: H02J 1/10, H02J 3/32, H02J 3/48, H02J 13/14

(54) **METHOD AND APPARATUS FOR EXTRACTING CURVE POINTS FOR CONTROLLING GRID-CONNECTED INVERTERS**

(30) Priority: 23.12.2024 KR 20240194661
(71) Applicant: Hanwha Solutions Corporation, Jung-gu Seoul 04541 (KR)
(72) Inventor: JANG, Ju Hyeong, 04541 Seoul (KR); KIM, Byung Jun, 04541 Seoul (KR); LEE, Sang Hoon, 04541 Seoul (KR); CHA, Seung Pyo, 04541 Seoul (KR)
(74) Representative: Mooser, Sebastian Thomas

(57) **Abstract**

Provided is a curve point extraction method including receiving a power control requirement specification for controlling a grid-connected inverter from a server, determining whether a required function included in the power control requirement specification is included in a preset function, determining whether a number of candidate points included in the power control requirement specification satisfies a minimum number corresponding to the required function, determining whether a range of the candidate points satisfies an allowable range of curve points corresponding to the required function, and sorting the candidate points and extracting the curve points based on a curve point extraction algorithm corresponding to the required function.

## Description

### BACKGROUND

### 1. Field

The present disclosure relates to a method and apparatus for extracting curve points for controlling grid-connected inverters.

### 2. Description of the Related Art

Grid-connected inverters play a crucial role in maintaining the stability of a power grid, and thus are required to perform various control functions. Inverters are typically required to perform power trip or compensation functions through control functions such as Volt-Watt (voltage-active power), Volt-Var (voltage-reactive power), Watt-Var (active power-reactive power), and voltage-frequency trip. These functions are defined in the international standard IEEE 1547-2018. Each function is represented by a specific curve, and the number and allowable ranges of coordinates forming the curve are specified by the standard.

An upper-level controller transmits such curve data to the inverter to perform control. However, the number of curve points transmitted by the upper-level controller may vary depending on the situation. For example, when the upper-level controller provides an arbitrary number of curve points that do not comply with the requirements of IEEE 1547-2018, the inverter may fail to interpret the corresponding data correctly, which could result in data loss or incorrect matching. Such issues may prevent the inverter from performing control in accordance with the standard, thereby adversely affecting the stability of a grid.

Accordingly, there is a need to develop a technology that enables the inverter to perform power control through a curve point extraction algorithm without being constrained by communication protocol constraints.

The related art described above is technical information that the present inventors have possessed in order to derive the present disclosure or have acquired in a process of deriving the present disclosure, and is not necessarily a known technology disclosed to the general public before filing the present disclosure.

### SUMMARY

The present disclosure is directed to providing a method and apparatus for extracting curve points for controlling grid-connected inverters. The problem to be solved by the present disclosure is not limited to the above-mentioned problem, and other problems and advantages of the present disclosure not mentioned may be understood by the following description and more clearly understood by the embodiments of the present disclosure. In addition, it will be appreciated that the problems and advantages to be solved by the present disclosure may be realized by means and combinations thereof indicated in the claims.

According to a first aspect of the present disclosure, there is provided a curve point extraction method including receiving a power control requirement specification for controlling a grid-connected inverter from a server, determining whether a required function included in the power control requirement specification is included in a preset function, determining whether a number of candidate points included in the power control requirement specification satisfies a minimum number corresponding to the required function, determining whether a range of the candidate points satisfies an allowable range of curve points corresponding to the required function, and sorting the candidate points and extracting the curve points based on a curve point extraction algorithm corresponding to the required function.

According to a second aspect of the present disclosure, there is provided a curve point extraction apparatus including a memory in which at least one program is stored, and a processor configured to operate by executing the at least one program, the processor is further configured to obtain a power control requirement specification for controlling a grid-connected inverter, which is received from a server, determine whether a required function included in the power control requirement specification is included in a preset function, determine whether a number of candidate points included in the power control requirement specification satisfies a minimum number corresponding to the required function, determine whether a range of the candidate points satisfies an allowable range of curve points corresponding to the required function, and sort the candidate points and extract the curve points based on a curve point extraction algorithm corresponding to the required function.

According to a second aspect of the present disclosure, there is provided a computer-readable recording medium on which a program for executing the curve point extraction method according to the first aspect on a computer is recorded.

Other aspects, features, and advantages other than those described above will become apparent from the following drawings, claims, and detailed description of the disclosure.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is an exemplary diagram for schematically describing a power supply system;
FIG. 2 is a block diagram for describing a power supply system according to an embodiment of the present disclosure;
FIG. 3 is a flowchart for schematically describing a curve point extraction method according to an embodiment of the present disclosure;
FIG. 4 is a flowchart for describing a curve point extraction method for performing a voltage-active power function according to an embodiment of the present disclosure;
FIG. 5 is an example of a control curve for performing the voltage-active power function according to an embodiment of the present disclosure;
FIG. 6 is a flowchart for describing a curve point extraction method for performing a voltage-reactive power function according to an embodiment of the present disclosure;
FIG. 7 is an example of a control curve for performing the voltage-reactive power function according to an embodiment of the present disclosure;
FIG. 8 is a flowchart for describing a curve point extraction method for performing an active power-reactive power function according to an embodiment of the present disclosure;
FIG. 9 is an example of a control curve for performing the active power-reactive power function according to an embodiment of the present disclosure;
FIGS. 10 and 11 are flowcharts for describing curve point extraction methods for performing a voltage/frequency trip function according to an embodiment of the present disclosure;
FIG. 12 is an example of a control curve for performing the trip function according to an embodiment of the present disclosure;
FIG. 13 is a flowchart for describing an example of a curve point extraction method according to an embodiment of the present disclosure; and
FIG. 14 is a block diagram for describing an example of an internal configuration of a curve point extraction apparatus according to an embodiment of the present disclosure.

### DETAILED DESCRIPTION

The effects and features of the present disclosure and the accompanying methods thereof will become apparent from the following description of the embodiments, taken in conjunction with the accompanying drawings. However, it should be understood that the present disclosure is not limited to the embodiments presented below, but may be implemented in various other forms and includes all transformations, equivalents, and substitutes included in the spirit and scope of the present disclosure. It should be understood, however, that the description of the embodiments is provided to enable the present disclosure to be complete, and will fully convey the scope of the disclosure to one of ordinary skill in the art to which the present disclosure belongs. In explaining the present disclosure, if it is determined that a detailed description of a related known technology may obscure the gist of the present disclosure, the detailed description will be omitted.

The terms used in the present disclosure are used to describe only specific embodiments or examples, and are not intended to limit the present disclosure. Unless otherwise defined, all terms used herein have the same meanings as those generally understood by those with ordinary knowledge in the field of art to which the present disclosure belongs.

In the present specification, singular forms are intended to include plural forms as well, unless the context clearly indicates otherwise. In addition, the terms "include" or "have" should be understood to be intended to designate that illustrated features, numbers, steps, operations, components, parts or combinations thereof exist and not to preclude the existence of one or more different features, numbers, steps, operations, components, parts or combinations thereof, or the possibility of the addition thereof.

In addition, terms including ordinal numbers such as "first" or "second" used herein may be used to describe various components, but the components are not limited by the terms, and the terms are used only for the purpose of distinguishing one component from another. These terms are used only for the purpose of distinguishing one component from another component.

Phrases such as "in an embodiment," " according to an embodiment", "relating to an embodiment", "according to one embodiment implementation", and the like appearing in various places in the present specification are not necessarily all referring to the same embodiment. In addition, throughout the specification, "embodiment" is a random division for easily describing the present disclosure in the present specification, and each embodiment need not be mutually exclusive. For example, configurations mentioned to describe one embodiment may be applied and implemented in other embodiments and may be changed and applied and implemented without departing from the idea and scope of the present disclosure.

Some embodiments of the disclosure may be represented by functional block configurations and various processing operations. Some or all of these functional blocks may be implemented by various numbers of hardware and/or software configurations that perform particular functions. For example, the functional blocks of the present disclosure may be implemented by one or more microprocessors or by circuit configurations for a certain function.

In addition, for example, the functional blocks of the present disclosure may be implemented in various programming or scripting languages. The functional blocks may be implemented by algorithms executed in one or more processors. In addition, the present disclosure may employ conventional techniques for electronic environment setting, signal processing, and/or data processing. Terms such as "mechanism", "element," "means," and "configuration" can be used broadly and are not limited to mechanical and physical configurations. In addition, terms such as "unit," "-or/-er," and "module" denote a unit that processes at least one function or operation, which may be implemented in hardware or software, or implemented in a combination of hardware and software.

In addition, a connection line or a connection member between components shown in the drawings is merely a functional connection and/or a physical or circuit connection. In an actual device, connections between components may be represented by various functional connections, physical connections, or circuit connections that are replaceable or added.

Further, some components in the drawings may be shown to be exaggerated in size or proportion. In addition, components shown in one drawing may not be shown in other drawings.

Hereinafter, the present disclosure will be described in detail with reference to the accompanying drawings.

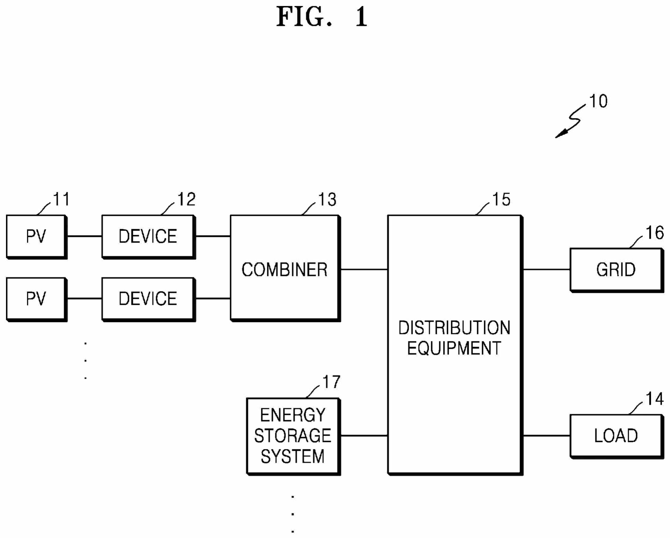

FIG. 1 is an exemplary diagram for schematically describing a power supply system.

Referring to FIG. 1, a power supply system 10 may include a photovoltaic (PV) module 11, a device 12, a load 14, and/or distribution equipment 15. The power supply system 10 may be connected to an external power grid 16.

At least one photovoltaic module 11 may be installed on a building roof, exterior wall, or the like, and may generate power. A plurality of photovoltaic modules 11 may be connected together to form a photovoltaic module array.

The photovoltaic module 11 may be connected to the device 12. For example, at least one device 12 may be connected to each photovoltaic module 11. In an example, when one device 12 is connected to each photovoltaic module 11, the number of devices 12 included in the power supply system 10 may be equal to the number of photovoltaic modules 11.

The device 12 may be a PCS (Power Conditioning System or Power Conversion System), that performs power conversion on the power generated by the photovoltaic module 11. For example, the device 12 may perform a predetermined conversion on the power generated by the photovoltaic module 11 and supply the converted power to other components (e.g., the power grid 16, the load 14, and/or the like) of the power supply system 10.

In some embodiments, the device 12 may be a module-level power electronics (MLPE). For example, the device 12 may be an optimizer or a microinverter (MI).

In an example, when the device 12 is an optimizer, the device 12 may regulate power generated by the photovoltaic module 11 and output the regulated power to an inverter (e.g., a string inverter). A current converted by the inverter (e.g., from direct current (DC) current to alternating current (AC) current) may be output to the power grid 16 or the load 14.

In another example, when the device 12 is a microinverter, the device 12 may convert power generated by the photovoltaic module 11 (e.g., from DC current to AC current). The current converted by the device 12 may be output to the power grid 16 or the load 14.

As necessary, the power supply system 10 may further include a combiner 13. At least some of the devices 12 may be connected to the distribution equipment 15 via the combiner 13. For example, power output from a plurality of devices 12 may be combined into a single output at the combiner 13 and supplied to the distribution equipment 15.

In some embodiments, the devices 12 may be connected to the distribution equipment 15 via a power path that does not include the combiner 13. At least one of the devices 12 may be connected to the distribution equipment 15 via the power path that does not include the combiner 13, and at least one other device 12 may be connected to the distribution equipment 15 via the combiner 13.

The combiner 13 may perform control of voltage, current, and/or power output from the device 12 based on power supply states of the photovoltaic module 11, the device 12, and/or the power grid 16, and the operation mode of the combiner 13 may be set to a diagnostic mode, an operation mode, or the like.

In some embodiments, the combiner 13 may include an energy management system (EMS) that controls the operation of the combiner 13. The EMS may perform control of voltage, current, and/or power supplied to or output from the combiner 13 based on power supply states of the photovoltaic module 11, the device 12, and/or the power grid 16, and may set the operation mode of the combiner 13 to a diagnostic mode, an operation mode, or the like.

The load 14 refers to an object installed in an electricity consumer such as a residential building, commercial facility, or factory, and operating by receiving at least one of energy generated by the photovoltaic module 11, energy stored in an energy storage system 17, and energy supplied from the power grid 16. For example, when the electricity consumer to which power is supplied is a residential building, the load 14 may include home appliances such as a washing machine, a refrigerator, or a television (TV).

The power grid 16 may include an infrastructure system for generating, transmitting, and distributing power. For example, the power grid 16 may include infrastructure systems such as power plants, substations, and power line networks. In some embodiments, the power grid 16 may deliver electric energy generated at a power plant to the power supply system 10 or deliver surplus power generated by the power supply system 10 to the outside.

For example, commercial power transmitted from the power grid 16 through utility poles may be supplied to electricity consumers via a transformer. For example, the power supply system 10 may also be implemented as an off-grid system that is not connected to the power grid 16.

In some embodiments, the power supply system 10 may further include at least one energy storage system 17. As necessary, the power supply system 10 may include a plurality of energy storage systems 17. The energy storage system 17 may receive and store power generated by the photovoltaic module 11 and/or power delivered from the power grid 16. By storing power and supplying the power to the load 14 when needed, the energy storage system 17 may supply power efficiently.

The energy storage system 17 may include a battery for storing power and a power conversion module. The battery may be provided with a battery management system (BMS) that monitors the state of charge (SOC), state of health (SOH), voltage, and/or current of the battery, performs diagnosis on the battery, and provides safety functions such as current interruption.

In some embodiments, the power conversion module may be a power conversion system (PCS) configured to perform a power conversion between a battery side and an opposite side. For example, the PCS may perform a conversion between DC current on the battery side and AC current on the opposite side. In an example, the PCS may include a bidirectional DC-DC converter connected to the battery for voltage conversion, and a bidirectional inverter that connects the DC-DC converter to the outside of the energy storage system 17.

In some embodiments, the energy storage system 17 may further include an energy management system (EMS) that controls the operation of the energy storage system 17. The EMS may perform control of voltage, current, and/or power supplied to or output from the energy storage system 17 based on power supply states of the battery and/or the power grid 16, and may set the operation mode of the energy storage system 17 to a diagnostic mode, an operation mode, or the like.

As necessary, the EMS coupled to a predetermined component of the power supply system 10 may control not only the operation of the corresponding component, but also the operation of other components of the power supply system 10. For example, the EMS coupled to the combiner 13 or the energy storage system 17 may control operations of both the combiner 13 and the energy storage system 17.

In some embodiments, the distribution equipment 15 may provide electrical connections between components of the power supply system 10 and may control a power flow within the power supply system 10. For example, the distribution equipment 15 may electrically connect the photovoltaic module 11 to the load 14. In an example, by being connected to the device 12 coupled to the photovoltaic module 11, the distribution equipment 15 may electrically connect the photovoltaic module 11 to the load 14. As necessary, the distribution equipment 15 may be further connected to at least one of the energy storage system 17 and the power grid 16.

For example, the distribution equipment 15 may be a distribution panel that distributes power within the power supply system 10. In an example, the distribution equipment 15 may be a master service panel (MSP) that distributes power generated by the photovoltaic module 11 to the load 14 or the like.

In another example, the distribution equipment 15 may be a main controller that performs power distribution within the power supply system and controls each of the devices 12. In an example, the main controller may include a switch, a circuit breaker, and a control unit. The switch, the circuit breaker, and the control unit may be implemented as separate devices, or at least some thereof may be included in a single device.

The main controller may include a switch that controls electrical connections between components connected to the main controller, such as the device 12 and the load 14. For example, the main controller may include a relay, a power semiconductor, or the like that provides or interrupts electrical connections to the device 12 and/or the energy storage system 17 based on an operating status of each component of the power supply system 10.

The main controller may perform a rapid shutdown to stop power generation of the photovoltaic module 11 in an emergency situation, such as the occurrence of an overcurrent in the power supply system 10. To this end, the main controller may include a circuit breaker that disconnects the connection between the device 12 and the load 14.

The main controller may include a control unit that generally controls the operation of the main controller. The control unit may also control the operation of other components of the power supply system 10, such as the device 12 or the energy storage system 17, in addition to the main controller.

The control unit may perform control of voltage, current, and/or power that is output from or supplied to each component, based on power supply states of the photovoltaic module 11, the device 12, the combiner 13, the load 14, the power grid 16, and/or the energy storage system 17. In addition, the control unit may set the operation mode of the main controller, the device 12, and/or the energy storage system 17 to a diagnostic mode, an operation mode, or the like.

For example, the control unit may control the photovoltaic module 11, the device 12, the combiner 13, and/or the energy storage system 17 based on the state of the power supply system 10. In an example, the control unit may control other components of the power supply system 10 by enabling the main controller to perform communication with other components of the power supply system 10 (e.g., the device 12). Communication between the main controller and other components of the power supply system 10 may be performed using a power line communication (PLC) method, but the present disclosure is not limited thereto.

In an example, the control unit may control the device 12 based on a power generation state of the photovoltaic module 11. For example, the main controller may receive a control command from a server that monitors the power generation state of the photovoltaic module 11, and the control unit may control the device 12 according to the control command.

When power supply from the power grid 16 is not stable (e.g., in an off-grid situation or the like), the main controller may supply power to at least some of the loads 14. For example, when power supply from the power grid 16 is not stable, the main controller may preferentially supply power generated by the photovoltaic module 11 and/or power stored in the energy storage system 17 to a backup load that has a relatively higher need for stable power supply.

In some embodiments, the power supply system 10 may further include an auxiliary power generation device (e.g., a diesel generator or the like) that generates power in a manner separate from photovoltaic generation. For example, the auxiliary power generation device may be additionally connected to the distribution equipment 15. When the photovoltaic module 11 and the energy storage system 17 alone cannot supply sufficient power to the backup load due to environmental factors such as time of day or weather, the main controller may supply power generated by the auxiliary power generation device to the backup load.

The control unit may be implemented by at least one processor. The processor may process instructions of a computer program by performing basic arithmetic, logic, and input/output operations. Here, the instructions may be provided from an internal memory of the main controller or an external device. In addition, the processor may generally control operations of other components included in the main controller.

For example, the processor may perform at least a portion of data analysis, processing, and result information generation to perform the above-described operations using at least one of rule-based logic or artificial intelligence (AI) algorithms such as machine learning, neural networks, or deep learning algorithms. Examples of neural networks may include neural network models based on architectures such as a convolutional neural network (CNN), a deep neural network (DNN), and a recurrent neural network (RNN).

For example, the processor may be implemented as an array of multiple logic gates, or as a combination of a general-purpose microprocessor and a memory in which a program executable by the microprocessor is stored. For example, the processor may include a general-purpose processor, a central processing unit (CPU), a microprocessor, a digital signal processor (DSP), a controller, a microcontroller, a state machine, or the like.

In some environments, the processor may include an application-specific integrated circuit (ASIC), a programmable logic device (PLD), a field-programmable gate array (FPGA), or the like. For example, the processor may refer to a combination of processing devices such as, a combination of a DSP and a microprocessor, a combination of a plurality of microprocessors, a combination of one or more microprocessors in conjunction with a DSP core, or a combination of any other such configurations.

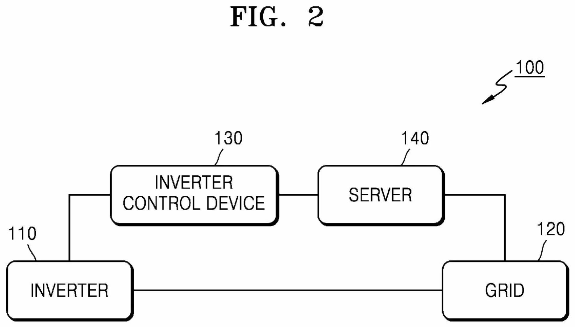

By combining at least some of the components described above, the power supply system 10 may be implemented in various forms. Hereinafter, an embodiment of the power supply system 10 will be described with reference to FIG. 2. However, the implementation of the power supply system 10 is not limited to the embodiment described below.

FIG. 2 is a block diagram for describing a power supply system according to an embodiment of the present disclosure.

Referring to FIG. 2, a power supply system 100 according to an embodiment of the present disclosure may include an inverter 110, a grid 120, an inverter control device 130, and a server 140.

In an embodiment, the inverter 110 may convert DC power into AC power. For example, the power converted by the inverter 110 may be output to the grid 120. The configuration is not limited to that shown in FIG. 2, and the AC power converted by the inverter 110 may be supplied to a load or other power-consuming devices.

In another embodiment, the inverter 110 may convert AC power into DC power. For example, the inverter 110 may convert AC power supplied from the grid 120 into DC power. For example, the DC power converted by the inverter 110 may be output to a battery or an energy storage system.

In an embodiment, the inverter 110 may be implemented as one of a microgrid inverter, a string inverter, a central inverter, a hybrid inverter, a multi-level inverter, a vehicle inverter, and a smart inverter.

In an embodiment, the inverter 110 may be an inverter installed in an energy storage system (ESS). For example, the ESS may be connected to a grid or a load based on AC power. For example, the inverter 110 installed in the ESS may convert DC power from a battery included in the ESS into AC power. Alternatively, the inverter 110 installed in the ESS may convert AC power received by the ESS into DC power.

In an embodiment, the grid 120 may receive AC power converted by the inverter 110. In another embodiment, the grid 120 may supply AC power to the inverter 110.

The inverter control device 130 may refer to a component that controls the operation of a grid-connected inverter and performs various functions to maintain grid stability. For example, the inverter control device 130 may include one or more devices for various levels of control, including local and/or centralized control of the inverter. For example, the inverter control device 130 may include a control device embedded in the inverter or a local control device. In another example, the inverter control device 130 may include a device for managing a plurality of inverters or distributed energy resources (DERs). In another example, the inverter control device 130 may include an EMS. In addition to the examples described above, any device capable of controlling the operation of the inverter may be included as the inverter control device 130 of the present disclosure.

The server 140 may refer to a component that processes data and transmits control commands necessary for the stable operation and efficient management of the power grid. For example, the server 140 may monitor the state of the entire grid in real time and, when necessary, generate control commands to manage power generation, transmission, distribution, and load adjustment. For example, the server 140 may refer to a main server used by an operator of the grid 120, and may be referred to as a grid operation server.

In an embodiment, the inverter control device 130 and the server 140 may communicate with each other to maintain the stability of the overall power grid. For example, the server 140 may transmit predetermined information to the inverter control device 130. In addition, the inverter control device 130 may generate a control command for controlling the inverter 110 based on the predetermined information received from the server 140, and may control the inverter 110 based on the generated control command.

In an embodiment, the server 140 may transmit a power control requirement specification to the inverter control device 130. For example, the power control requirement specification may refer to a specification related to power control that is required to ensure interoperability between the grid 120 and the inverter 110. For example, the power control requirement specification may include allowable ranges for voltage, active power, and reactive power. In another example, the power control requirement specification may include one or more candidate points for the inverter control device 130 to use in performing power control functions. More detailed descriptions will be provided below.

In an embodiment, the inverter control device 130 may perform the power control functions based on the power control requirement specification received from the server 140. For example, the power control functions that are performable by the inverter control device 130 may include at least one of the following: a function that performs control based on a relationship between voltage and active power (hereinafter referred to as a first function for convenience of description),a function that performs control based on a relationship between voltage and reactive power (hereinafter referred to as a second function for convenience of description),a function that performs control based on a relationship between active power and reactive power (hereinafter referred to as a third function for convenience of description), and a function that performs control based on grid abnormalities related to voltage or frequency (hereinafter referred to as a fourth function, which may also be referred to as a trip function, for convenience of description).

In an embodiment, the inverter control device 130 may generate a control curve based on curve points in order to perform the power control functions. For example, the inverter control device 130 may generate the control curve using a plurality of curve points, and the control curve may be understood as a curve representing a relationship, such as that between voltage and active power.

In some embodiments, when the number of candidate points transmitted from the server 140 to the inverter control device 130 exceeds the number required to generate the control curve, an issue may arise regarding which candidate points should be selected to generate the control curve. Accordingly, the present disclosure provides an embodiment for extracting appropriate curve points, without being affected by communication protocol constraints between the server 140 and the inverter control device 130.

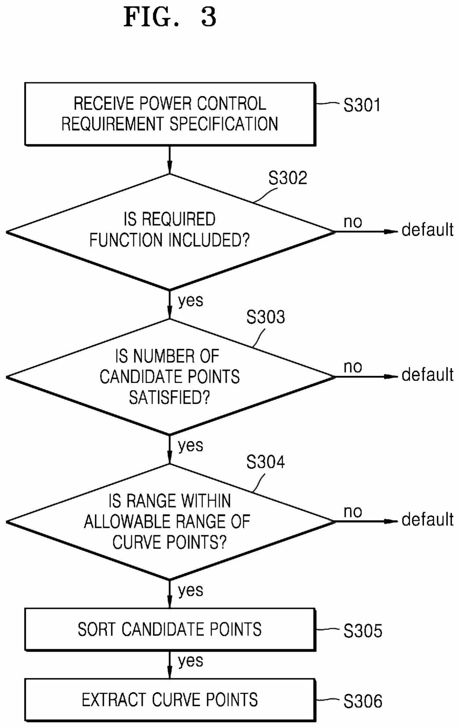

FIG. 3 is a flowchart for schematically describing a curve point extraction method according to an embodiment of the present disclosure.

In operation 301, a curve point extraction apparatus may receive a power control requirement specification for controlling grid-connected inverters from a server. Hereinafter, for convenience of description, the curve point extraction apparatus will be simply referred to as "the apparatus" in the present disclosure. The apparatus may refer to the inverter control device 130 described above with reference to FIG. 2.

In an embodiment, the power control requirement specification may include required functions. For example, the required functions may include various functions related to power control. For example, the required functions may include a function for controlling active power, a function for controlling reactive power, a function for controlling voltage and frequency, a function for controlling emergency situations, a function for energy storage and management, and a function for maintaining power quality.

In an embodiment, the power control requirement specification may include candidate points. Here, the candidate points may be used to generate a control curve for performing power control functions. For example, the power control requirement specification may include a plurality of candidate points, each of which may be expressed as specific coordinates based on voltage, active power, reactive power, frequency, or the like.

In operation 302, the apparatus may determine whether the required function included in the power control requirement specification is included in preset functions.

In an embodiment, the preset functions may include at least one of a first function that performs control based on a relationship between voltage and active power, a second function that performs control based on a relationship between voltage and reactive power, a third function that performs control based on a relationship between active power and the reactive power, and a fourth function that performs control based on grid abnormalities related to voltage or frequency.

In an embodiment, the first function may include a function of adjusting an active power output of the inverter when a grid voltage deviates from an allowable range. In an embodiment, the second function may include a function of controlling the generation or absorption of reactive power according to grid voltage. In an embodiment, the third function may include a function of controlling the generation or absorption of reactive power according to active power. In an embodiment, the fourth function may include a function of controlling the connection to or disconnection from the grid based on grid abnormalities related to voltage or frequency. For example, the fourth function may include a fifth function of disconnecting the inverter from the grid in response to the occurrence of an overvoltage or overfrequency, and a sixth function of disconnecting the inverter from the grid in response to the occurrence of an undervoltage or underfrequency.

In an embodiment, when the required function included in the power control requirement specification is included in the preset functions, the apparatus may perform operation 303. For example, when the required function is not included in the preset functions, the apparatus may maintain the output of a curve point extraction algorithm at a default value.

In operation 303, the apparatus may determine whether the number of candidate points included in the power control requirement specification satisfies the minimum number corresponding to the required function.

In an embodiment, the minimum number corresponding to the required function may be preset based on standard specifications related to power control of the inverter. For example, according to the standard IEEE 1547-2018, the minimum number may be set to two for the first function, four for the second function, six for the third function, and five for the fourth function (or for the fifth and sixth functions).

In an embodiment, when the number of candidate points satisfies the minimum number corresponding to the required function, the apparatus may perform operation 304. For example, when the number of candidate points does not satisfy the minimum number corresponding to the required function, the apparatus may maintain the output of the curve point extraction algorithm at the default value.

In operation 304, the apparatus may determine whether the range of the candidate points satisfies an allowable range of curve points corresponding to the required function.

In an embodiment, the allowable range of curve points may be preset based on standard specifications related to power control of the inverter. For example, according to the standard IEEE 1547-2018, in a control curve for a voltage-active power function, voltage-axis (i.e., x-axis) coordinate values of a first curve point and a second curve point may be set based on a nominal voltage of 240 V.

In an embodiment, when the range of the candidate points satisfies the allowable range of curve points corresponding to the required function, the apparatus may perform operation 305 and operation 306.

For example, when the range of the candidate points does not satisfy the allowable range of curve points corresponding to the required function, the apparatus may maintain the output of the curve point extraction algorithm at the default value.

In operation 305, the apparatus may sort the candidate points, and in operation 306, the apparatus may extract curve points based on the curve point extraction algorithm corresponding to the required function.

In an embodiment, the apparatus may generate a control curve using the curve points extracted based on the curve point extraction algorithm, and may perform a power control function based on the generated control curve.

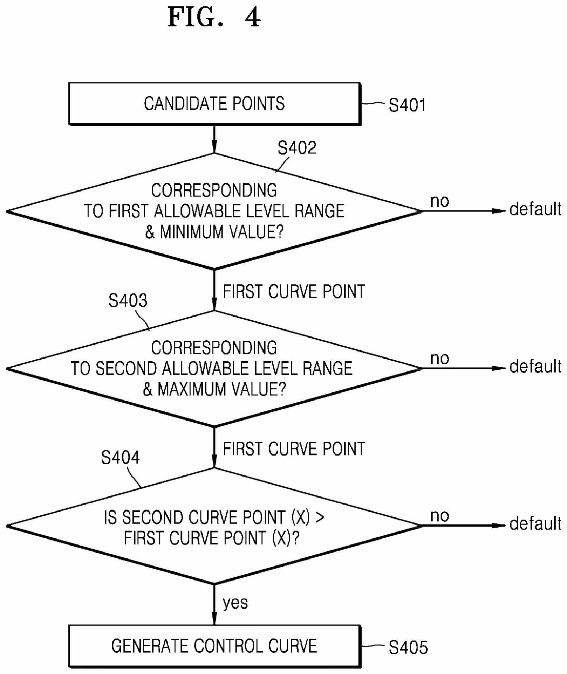

Embodiments of curve point extraction algorithms corresponding to the respective required functions included in the present disclosure will be described below with reference to FIGS. 4 to 12.

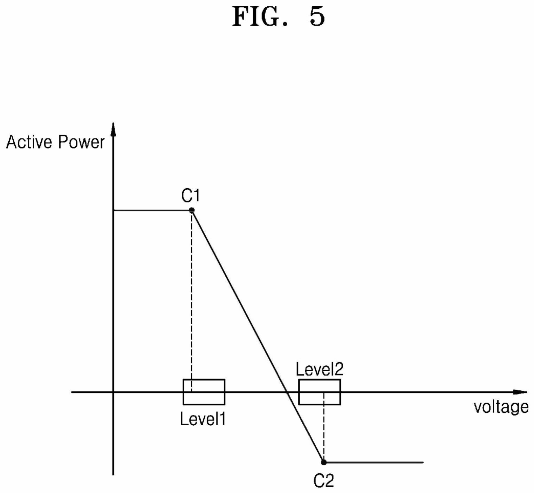

FIG. 4 is a flowchart for describing a curve point extraction method for performing a voltage-active power function according to an embodiment of the present disclosure, and FIG. 5 is an example of a control curve for performing the voltage-active power function according to an embodiment of the present disclosure.

Referring to FIG. 4, in operation 401, the apparatus may receive candidate points related to the first function, which performs control based on the relationship between voltage and active power, from the server. In some embodiments, the candidate points described in operation 401 refer to the finally sorted candidate points that have been processed through operations 301 to 306 described above with reference to FIG. 3.

In operation 402, the apparatus may determine, as a first curve point, the candidate point having the lowest voltage among the candidate points whose voltage falls within a first allowable level range.

In operation 403, the apparatus may determine, as a second curve point, the candidate point having the highest voltage among the candidate points whose voltage falls within a second allowable level range.

In an embodiment, the first allowable level range and the second allowable level range may respectively be understood as ranges corresponding to a first allowable level and a second allowable level, and each range may be preset based on a nominal voltage.

Referring to FIG. 5, a voltage of the first curve point (C1) may have the minimum value while being included the first allowable level range (level 1), and a voltage of the second curve point (C2) may have the maximum value while being included in the second allowable level range (level 2).

In some embodiments, as shown in FIG. 5, since the voltage of the second curve point (C2) (i.e., a positive value on the voltage-axis (x-axis)) must be greater than the voltage of the first curve point (C1), a verification operation for the voltage is required.

In operation 404, the apparatus may verify whether the voltage of the second curve point is greater than the voltage of the first curve point.

In an embodiment, when the voltage of the second curve point is less than the voltage of the first curve point, the apparatus may either maintain the output of the curve point extraction algorithm at a default value or re-execute the algorithm starting from operation 401.

In operation 405, when the verification is completed, the apparatus may generate a control curve using the first curve point and the second curve point, and may perform the first function based on the control curve.

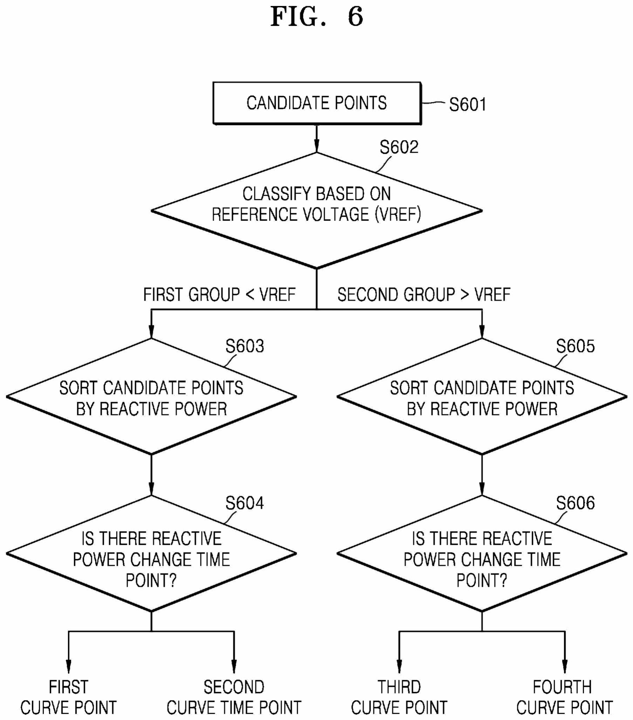

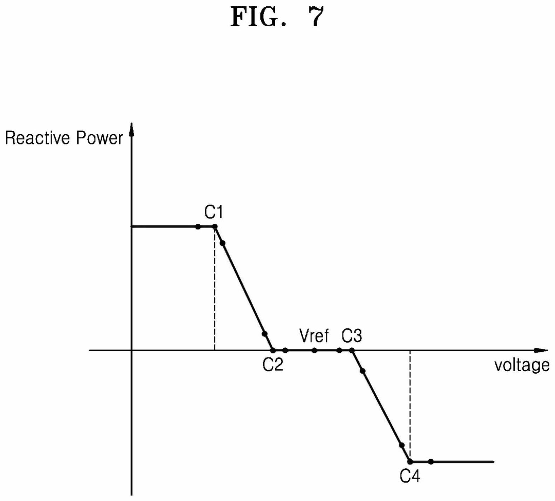

FIG. 6 is a flowchart for describing a curve point extraction method for performing a voltage-reactive power function according to an embodiment of the present disclosure, and FIG. 7 is an example of a control curve for performing the voltage-reactive power function according to an embodiment of the present disclosure.

Referring to FIG. 6, in operation 601, the apparatus may receive candidate points related to the second function, which performs control based on the relationship between voltage and reactive power, from the server. For example, the candidate points described in operation 601 refer to the finally sorted candidate points that have been processed through operations 301 to 306 described above with reference to FIG. 3.

In operation 602, the apparatus may classify the candidate points into a first group and a second group based on a reference voltage.

In an embodiment, the candidate points included in the first group may each have a voltage less than the reference voltage, and the candidate points included in the second group may each have a voltage greater than the reference voltage.

In an embodiment, the first group and the second group may each require at least two candidate points. Accordingly, the apparatus may terminate the curve point extraction algorithm in response to the number of candidate points classified into the first group or the second group being one.

In operation 603, the apparatus may sort the candidate points included in the first group based on reactive power.

In operation 604, the apparatus may determine a first curve point and a second curve point from among the sorted candidate points based on a time point at which the reactive power changes.

For example, the apparatus may determine the first curve point by sorting the candidate points in the first group in descending order based on reactive power, and may determine the second curve point by sorting the candidate points in ascending order based on the reactive power.

For example, referring to FIG. 7, the candidate points classified into the first group, in which voltage-axis (e.g., x-axis) values are less than the reference voltage, may be sorted in descending order based on reactive power-axis (e.g., y-axis) values, and the candidate point immediately before the first change in reactive power may be determined as the first curve point (C1).

In addition, the candidate points classified into the first group may be sorted in ascending order based on the reactive power-axis (e.g., y-axis) values, and the candidate point immediately before the first change in reactive power may be determined as the second curve point (C2).

In operation 605, the apparatus may sort the candidate points included in the second group based on reactive power.

In operation 606, the apparatus may determine a third curve point and a fourth curve point from among the sorted candidate points based on a time point at which the reactive power changes.

For example, the apparatus may determine the third curve point by sorting the candidate points in the second group in descending order based on reactive power, and may determine the fourth curve point by sorting the candidate points in ascending order based on the reactive power.

For example, referring to FIG. 7, the candidate points classified into the second group, in which the voltage-axis (e.g., x-axis) values are greater than the reference voltage, may be sorted in descending order based on the reactive power-axis (e.g., y-axis) values, and the candidate point immediately before the first change in reactive power may be determined as the third curve point (C3).

In addition, the candidate points classified into the second group may be sorted in ascending order based on the reactive power-axis (e.g., y-axis) values, and the candidate point immediately before the first change in reactive power may be determined as the fourth curve point (C4).

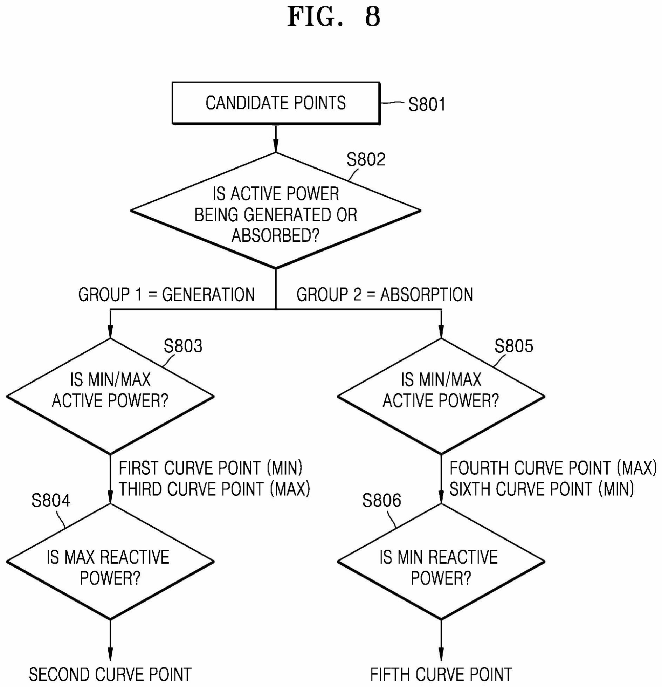

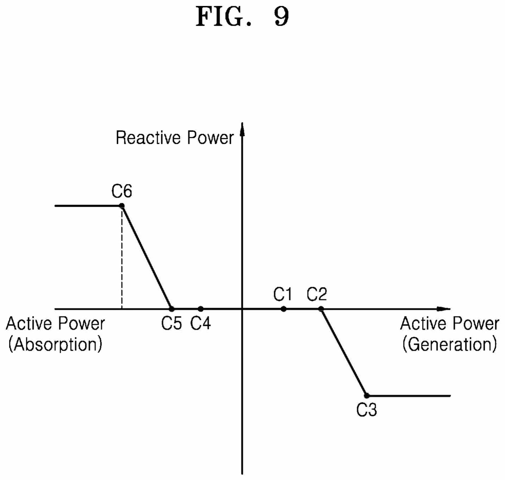

FIG. 8 is a flowchart for describing a curve point extraction method for performing an active power-reactive power function according to an embodiment of the present disclosure, and FIG. 9 is an example of a control curve for performing the active power-reactive power function according to an embodiment of the present disclosure.

Referring to FIG. 8, in operation 801, the apparatus may receive candidate points related to the third function, which performs control based on the relationship between active power and reactive power, from the server. For example, the candidate points described in operation 801 refer to the finally sorted candidate points that have been processed through operations 301 to 306 described above with reference to FIG. 3.

In operation 802, the apparatus may classify the candidate points into a first group and a second group based on a direction of active power generation or absorption.

In an embodiment, the candidate points included in the first group may be those having active power greater than zero, corresponding to the direction of active power generation, and the candidate points included in the second group may be those having active power less than zero, corresponding to the direction of active power absorption.

In an embodiment, the first group and the second group may each require at least three candidate points. Accordingly, the apparatus may terminate the curve point extraction algorithm in response to the number of candidate points in the first group or the second group being two or less.

In operation 803, the apparatus may determine, from among the candidate points included in the first group, the candidate point having the smallest active power as a first curve point, and the candidate point having the largest active power as a third curve point.

In operation 804, the apparatus may determine one of the candidate points located between the first curve point and the third curve point as a second curve point.

In an embodiment, when there is one candidate point between the first curve point and the third curve point, the apparatus may determine the one candidate point as the second curve point.

In another embodiment, the apparatus may determine, as the second curve point, the candidate point having the largest reactive power among the candidate points located between the first curve point and the third curve point. Referring to the control curve for the active power-reactive power function illustrated in FIG. 9, the first curve point (C1) and the third curve point (C3) may be determined based on the active power, and the second curve point (C2) may be determined based on the reactive power.

In operation 805, the apparatus may determine, from among the candidate points included in the second group, the candidate point having the largest active power as a fourth curve point, and the candidate point having the smallest active power as a sixth curve point.

In operation 806, the apparatus may determine one of the candidate points located between the fourth curve point and the sixth curve point as a fifth curve point.

In an embodiment, when there is one candidate point between the fourth curve point and the sixth curve point, the apparatus may determine that the one candidate point as the fifth curve point.

In another embodiment, the apparatus may determine, as the fifth curve point, the candidate point having the smallest reactive power among the candidate points located between the fourth curve point and the sixth curve point. Referring to the control curve for the active power-reactive power function illustrated in FIG. 9, the fourth curve point (C4) and the sixth curve point (C6) may be determined based on the active power, and the fifth curve point (C5) may be determined based on the reactive power.

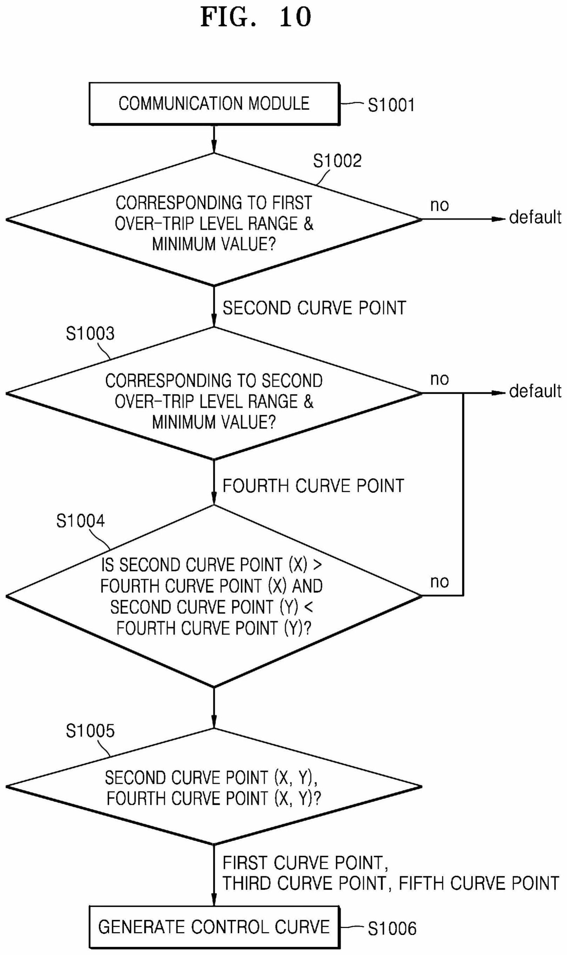

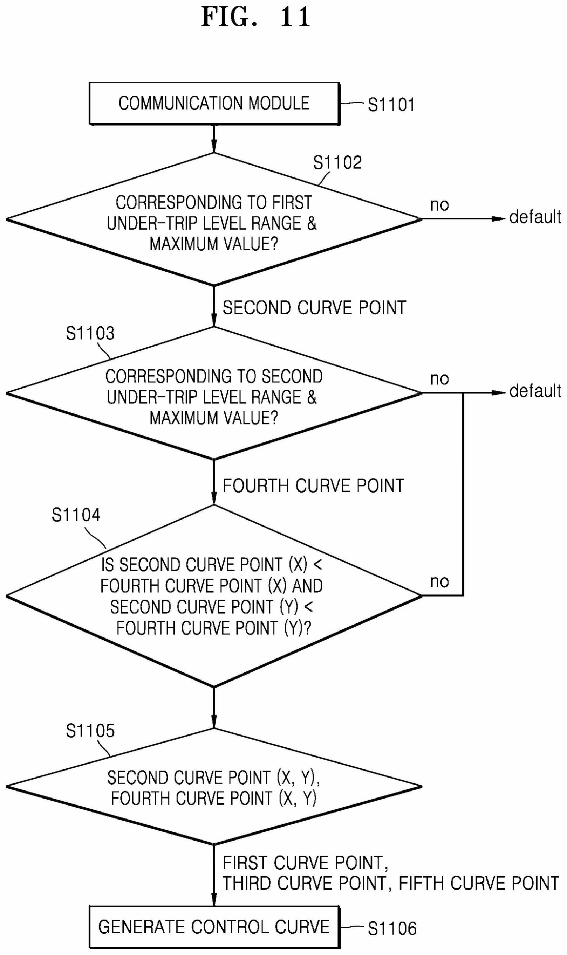

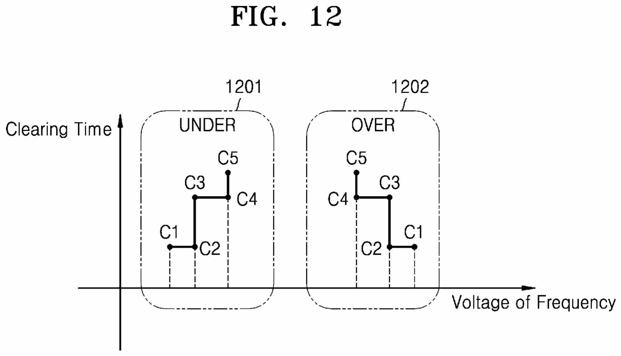

FIGS. 10 and 11 are flowcharts for describing curve point extraction methods for performing a voltage/frequency trip function according to an embodiment of the present disclosure, and FIG. 12 is an example of a control curve for performing the trip function according to an embodiment of the present disclosure.

FIG. 10 may be understood as illustrating the process of extracting curve points for a trip function corresponding to overvoltage or overfrequency, and FIG. 11 may be understood as illustrating the process of extracting curve points for a trip function corresponding to undervoltage or underfrequency. Repeated descriptions will be omitted.

Referring to FIGS. 10 and 11, in operations 1001 and 1101, the apparatus may receive candidate points related to the fifth function or the sixth function from the server. The candidate points described in operations 1001 and 1101 refer to the finally sorted candidate points that have been processed through operations 301 to 306 described above with reference to FIG. 3.

In operation 1002, the apparatus may determine, as a second curve point, the candidate point having the lowest voltage or frequency among the candidate points whose voltage or frequency falls within a second over-trip level range. Here, the second over-trip level range may be understood as a range of levels for interrupting overvoltage or overfrequency In addition, the second over-trip level range is distinguished from a first over-trip level range to be described below, and a second over-trip level has a higher value than a first over-trip level and may be understood as the maximum value of the level for interrupting overvoltage or overfrequency.

In operation 1003, the apparatus may determine, as a fourth curve point, the candidate point having the lowest voltage or frequency among the candidate points whose voltage or frequency falls within the first over-trip level range.

In operation 1004, the fourth curve point is required to satisfy an additional condition in relation to the second curve point. For example, a voltage or frequency of the fourth curve point is required to be less than that of the second curve point. In addition, a clearing time of the fourth curve point is required to be greater than that of the second curve point.

For example, referring to FIG. 12, in trip curve 1202 for interrupting overvoltage or overfrequency, it is illustrated that the fourth curve point (C4), in relation to the second curve point (C2), has a lower voltage or frequency (e.g., x-axis value) and a longer clearing time (e.g., y-axis value).

In an embodiment, when the fourth curve point does not satisfy the additional condition, the apparatus may maintain the output of the curve point extraction algorithm at a default value or re-perform the selection and verification the fourth curve point based on operations 1003 and 1004.

According to the embodiment, the second curve point and the fourth curve point may be determined as the candidate points having the lowest voltage or frequency among the candidate points included in the first over-trip level range or the second over-trip level range, thereby enabling interruption of overvoltage or overfrequency.

In operation 1005, the apparatus may determine a first curve point, a third curve point, and a fifth curve point based on coordinates of the second curve point and the fourth curve point, and more specifically, based on x-axis values (e.g., voltage or frequency) and y-axis values (e.g., clearing time) of the respective curve points.

In an embodiment, the apparatus may determine, as the first curve point, the candidate point whose voltage or frequency is greater than or equal to that of the second curve point and whose clearing time is equal to that of the second curve point.

In an embodiment, the apparatus may determine, as the third curve point, a candidate point whose voltage or frequency is equal to that of the second curve point and whose clearing time is equal to that of the fourth curve point.

In an embodiment, the apparatus may determine, as the fifth curve point, the candidate point whose voltage or frequency is equal to that of the fourth curve point and whose clearing time is greater than or equal to that of the fourth curve point.

In operation 1006, the apparatus may generate a control curve using the first to fifth curve points, and may perform the fifth function based on the control curve.

Referring to FIG. 11, in operation 1102, the apparatus may determine, as a second curve point, the candidate point having the highest voltage or frequency among the candidate points whose voltage or frequency falls within a second under-trip level range. Here, the second under-trip level range may be understood as a range of levels for interrupting undervoltage or underfrequency. In addition, the second under-trip level range is distinguished from a first under-trip level range, which will be described below, and a second under-trip level has a lower value than a first under-trip level and may be understood as the minimum value of the level for interrupting undervoltage or underfrequency.

In operation 1103, the apparatus may determine, as a fourth curve point, the candidate point having the highest voltage or frequency among the candidate points whose voltage or frequency falls within the first under-trip level range.

In operation 1104, the fourth curve point is required to satisfy an additional condition in relation to the second curve point. For example, a voltage or frequency of the fourth curve point is required to be greater than that of the second curve point. In addition, a clearing time of the fourth curve point is required to be greater than that of the second curve point.

For example, referring to FIG. 12, in trip curve 1201 for interrupting undervoltage or underfrequency, it is illustrated that the fourth curve point, in relation to the second curve point, has a higher voltage or frequency (e.g., x-axis value) and a longer clearing time (e.g., y-axis value).

In an embodiment, when the fourth curve point does not satisfy the additional condition, the apparatus may either maintain the output of the curve point extraction algorithm at a default value or re-perform the selection and verification of the fourth curve point based on operations 1103 and 1104.

According to the embodiment, the second curve point and the fourth curve point may be determined as the candidate points having the lowest voltage or frequency among the candidate points included in the first under-trip level range or the second under-trip level range, thereby enabling interruption of undervoltage or underfrequency.

In operation 1105, the apparatus may determine a first curve point, a third curve point, and a fifth curve point based on coordinates of the second curve point and the fourth curve point, and more specifically, based on x-axis values (e.g., voltage or frequency) and y-axis values (e.g., clearing time) of the respective curve points.

In an embodiment, the apparatus may determine, as the first curve point, the candidate point whose voltage or frequency is less than or equal to that of the second curve point and whose clearing time is equal to that of the second curve point.

In an embodiment, the apparatus may determine, as the third curve point, the candidate point whose voltage or frequency is equal to that of the second curve point and whose clearing time is equal to that of the fourth curve point.

In an embodiment, the apparatus may determine, as the fifth curve point, the candidate point whose voltage or frequency is equal to that of the fourth curve point and whose clearing time is greater than or equal to that of the fourth curve point.

In operation 1106, the apparatus may generate a control curve using the first to fifth curve points, and may perform the sixth function based on the control curve.

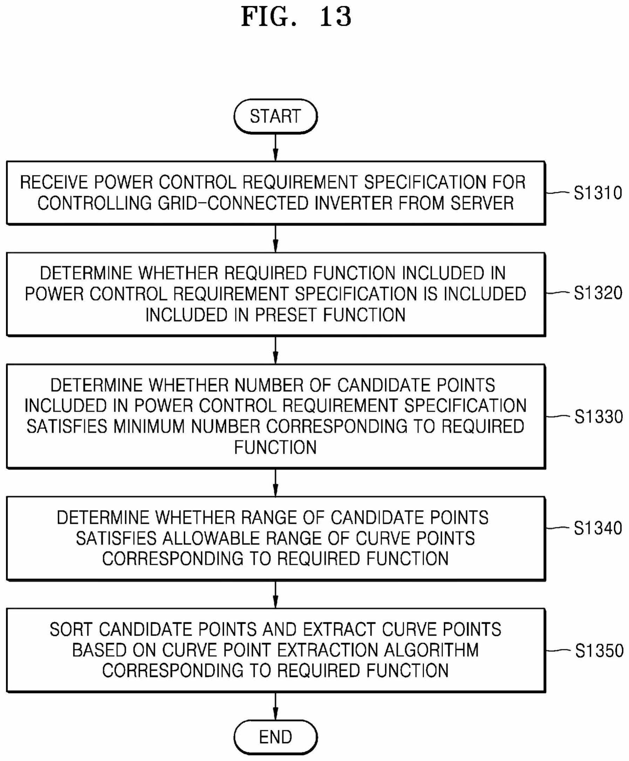

FIG. 13 is a flowchart for describing an example of a curve point extraction method according to an embodiment of the present disclosure.

Referring to FIG. 13, a curve point extraction method according to an embodiment may include operations 1310 to 1350.

In operation 1310, the apparatus may receive a power control requirement specification for controlling grid-connected inverters from the server.

In operation 1320, the apparatus may determine whether a required function included in the power control requirement specification is included in preset functions.

In an embodiment, the preset functions may include at least one of a first function that performs control based on a relationship between voltage and active power, a second function that performs control based on a relationship between the voltage and reactive power, a third function that performs control based on a relationship between the active power and the reactive power, and a fourth function that performs control based on grid abnormalities related to the voltage or frequency.

In operation 1330, the apparatus may determine whether the number of candidate points included in the power control requirement specification satisfies the minimum number corresponding to the required function.

In an embodiment, the minimum number corresponding to the required function may be two for the first function, four for the second function, six for the third function, and five for the fourth function.

In operation 1340, the apparatus may determine whether the range of the candidate points satisfies an allowable range of curve points corresponding to the required function.

In operation 1350, the apparatus may sort the candidate points and extract the curve points based on a curve point extraction algorithm corresponding to the required function.

In an embodiment, based on the required function being the first function that performs control based on the relationship between voltage and active power, the apparatus may determine, as a first curve point, the candidate point having the lowest voltage among the candidate points included in a first allowable level range, and determine, as a second curve point, the candidate point having the highest voltage among the candidate points included in a second allowable level range. In addition, the apparatus may verify whether a voltage of the second curve point is greater than that of the first curve point.

In an embodiment, based on the required function being the second function that performs control based on the relationship between voltage and reactive power, the apparatus may classify the candidate points into a first group and a second group based on a reference voltage, sort the candidate points included in each of the first group and the second group based on reactive power, determine the first curve point and the second curve point from the candidate points in the first group based on a time point at which the reactive power changes, and determine a third curve point and a fourth curve point from the candidate points in the second group based on a time point at which the reactive power changes.

In the above-described embodiment, the apparatus may terminate the curve point extraction algorithm in response to the number of candidate points classified into the first group or the second group being one.

In the above-described embodiment, the apparatus may determine, as the first curve point, the candidate point included in the first group and located immediately before the first change in reactive power among the candidate points sorted in descending order based on the reactive power, and may determine, as the second curve point, the candidate point included in the first group and located immediately before the first change in reactive power among the candidate points sorted in ascending order based on the reactive power.

In the above-described embodiment, the apparatus may determine, as the third curve point, the candidate point included in the second group and located immediately before the first change in reactive power among the candidate points sorted in descending order based on the reactive power, and may determine, as the fourth curve point, the candidate point included in the second group and located immediately before the first change in reactive power among the candidate points sorted in ascending order based on the reactive power.

In an embodiment, based on the required function being the third function that performs control based on the relationship between active power and reactive power, the apparatus may classify the candidate points into a first group and a second group according to a direction of active power generation or absorption. Among the candidate points included in the first group, the apparatus may determine the candidate point having the smallest active power as a first curve point, and the candidate point having the largest active power as a third curve point, and may determine, as a second curve point, one of the candidate points located between the first and third curve points within the first group. In addition, among the candidate points included in the second group, the apparatus may determine the candidate point having the largest active power as a fourth curve point, and the candidate point having the smallest active power as a sixth curve point, may determine, as a fifth curve point, one of the candidate points located between the fourth and sixth curve points within the second group.

In the above-described embodiment, the apparatus may terminate the curve point extraction algorithm when the number of candidate points included in the first group or the number of candidate points included in the second group is two or less.

In the above-described embodiment, when there is one candidate point between the first curve point and the third curve point, the apparatus may determine the one candidate point as the second curve point.

In the above-described embodiment, the apparatus may determine, as the second curve point, the candidate point having the largest reactive power among the candidate points located between the first curve point and the third curve point.

In the above-described embodiment, when there is one candidate point between the fourth curve point and the sixth curve point, the apparatus may determine the one candidate point as the fifth curve point.

In the above-described embodiment, the apparatus may determine, as the fifth curve point, the candidate point having the largest reactive power among the candidate points located between the fourth curve point and the sixth curve point.

In an embodiment, based on the required function being the fourth function that performs control based on grid abnormalities related to voltage or frequency, and being the fifth function that performs control based on grid abnormalities related to overvoltage or overfrequency, the apparatus may determine, as a second curve point, the candidate point having the lowest voltage or frequency among the candidate points whose voltage or frequency falls within a second over-trip level range. In addition, the apparatus may determine, as a fourth curve point, the candidate point having the lowest voltage or frequency among the candidate points whose voltage or frequency falls within a first over-trip level range, which has a voltage or frequency less than that of the second curve point and a clearing time greater than that of the second curve point. In addition, the apparatus may determine, as a first curve point, the candidate point whose voltage or frequency is greater than or equal to that of the second curve point and whose clearing time is equal to that of the second curve point, may determine, as a third curve point, the candidate point whose voltage or frequency is equal to that of the second curve point and whose clearing time is equal to that of the fourth curve point, and may determine, as a fifth curve point, the candidate point whose voltage or frequency is equal to that of the fourth curve point and whose clearing time is greater than or equal to that of the fourth curve point.

In an embodiment, based on the required function being the fourth function that performs control based on grid abnormalities related to voltage or frequency, and being the sixth function that performs control based on grid abnormalities related to undervoltage or underfrequency, the apparatus may determine, as a second curve point, the candidate point having the highest voltage or frequency among the candidate points whose voltage or frequency falls within a second under-trip level range. In addition, the apparatus may determine, as a fourth curve point, the candidate point having the highest voltage or frequency among the candidate points whose voltage or frequency falls within a first under-trip level range, which has a voltage or frequency greater than that of the second curve point and a clearing time greater than that of the second curve point. In addition, the apparatus may determine, as a first curve point, the candidate point whose voltage or frequency is less than or equal to that of the second curve point and whose clearing time is equal to that of the second curve point, may determine, as a third curve point, the candidate point whose voltage or frequency is equal to that of the second curve point and whose clearing time is equal to that of the fourth curve point, and may determine, as a fifth curve point, the candidate point whose voltage or frequency is equal to that of the fourth curve point and whose clearing time is greater than or equal to that of the fourth curve point.

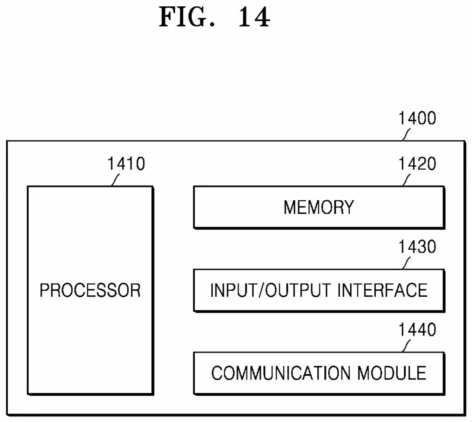

FIG. 14 is a block diagram for describing an example of an internal configuration of the curve point extraction apparatus according to an embodiment of the present disclosure.

Referring to FIG. 14, an apparatus 1400 includes a processor 1410, a memory 1420, an input/output interface 1430, and a communication module 1440. For convenience of description, only components related to the present disclosure are illustrated in FIG. 14. Accordingly, other general-purpose components other than the components illustrated in FIG. 14 may be further included in the apparatus 1400. In addition, it will be apparent to those skilled in the art related to the present disclosure that the processor 1410, the memory 1420, the input/output interface 1430, and the communication module 1440 illustrated in FIG. 14 may be implemented as independent devices.

In some embodiments, the apparatus 1400 may refer to the inverter control device 130 of FIG. 2 or the curve point extraction apparatus of FIGS. 3 to 13.

The processor 1410 may process instructions of a computer program by performing a basic arithmetic operation, a logic operation, and an input/output operation. Here, the instructions may be provided from the memory 1420 or an external device. In addition, the processor 1410 may control overall operations of the other components included in the apparatus 1400.

For example, the processor 1410 may control at least some of the operations of the inverter control device or the curve point extraction apparatus.

The processor 1410 may be implemented as an array of multiple logic gates, or as a combination of a general-purpose microprocessor and a memory in which a program executable by the microprocessor is stored. For example, the processor 1410 may include a general-purpose processor, a CPU, a microprocessor, a DSP, a controller, a microcontroller, a state machine, or the like. In some environments, the processor 1410 may include an ASIC, a PLD, an FPGA, or the like. For example, the processor 1410 may refer to a combination of processing devices such as, a combination of a DSP and a microprocessor, a combination of a plurality of microprocessors, a combination of one or more microprocessors in conjunction with a DSP core, or a combination of any other such configurations.

The memory 1420 may include any non-transitory computer-readable recording medium. In an example, the memory 1420 may include a permanent mass storage device such as a random access memory (RAM), a read-only memory (ROM), a disk drive, a solid state drive (SSD), a flash memory, or the like. In another example, the permanent mass storage device, such as a ROM, an SSD, a flash memory, a disk drive, or the like, may be a separate permanent storage device which is distinguishable from the memory. In addition, an operating system (OS) and at least one program code (e.g., a code for the processor 1410 to perform operations described above with reference to FIGS. 2 to 13) may be stored in the memory 1420.

These software components may be loaded from a computer-readable recording medium separate from the memory 1420. The separate computer-readable recording medium may be a recording medium that may be directly connected to the apparatus 1400, and may include, for example, a computer-readable recording medium, such as a floppy drive, a disk, a tape, a DVD/CD-ROM drive, a memory card, or the like. Alternatively, the software components may be loaded into the memory 1420 through the communication module 1440 instead of the computer-readable recording medium. For example, at least one program may be loaded into the memory 1420 based on a computer program (e.g.,, a computer program for performing, by the processor 1410, operations described above with reference to FIGS. 2 to 13) installed by the files provided through the communication module 1440 by developers or a computer file distribution system that distributes the installation files of applications.

The input/output interface 1430 may be a member for an interface with a device (e.g., a keyboard, a mouse, or the like) for input or output, the member being connected to the apparatus 1400 or being included in the apparatus 1400. In FIG. 14, the input/output interface 1430 is illustrated as being configured separately from the processor 1410, but the present disclosure is not limited thereto, and the input/output interface 1430 may be configured to be included in the processor 1410.

The communication module 1440 may provide a configuration or function that enables the apparatus 1400 to communicate with an external device over a network For example, a control signal, a command, data, or the like provided according to the control of the processor 1410 may be transmitted to the external device through the communication module 1440 and the network.

Meanwhile, the embodiments according to the present disclosure may be implemented in the form of a computer program that can be executed through various components on a computer, and such a computer program may be recorded on a computer-readable medium. Here, the medium may include hardware devices specially configured to store and execute program instructions, including magnetic media such as a hard disk, a floppy disk, and a magnetic tape, optical media such as a compact disc read-only memory (CD-ROM) and a digital versatile disk (DVD), magneto-optical media such as a floptical disk, and solid state drives such as a ROM, a RAM, and a flash memory, but the present disclosure is not limited thereto.

Meanwhile, the computer program may be a program specially designed and configured for the present disclosure or a program known and usable to those skilled in the computer software field. Examples of the computer program include machine language codes generated by a compiler as well as high-level language codes that are executable by a computer using an interpreter or the like.

According to the above-described technical solution of the present disclosure, curve points of a grid code can be extracted and used for power control, regardless of a communication protocol.

The effects according to embodiments are not limited to the above-mentioned effects, and other effects not mentioned may be clearly understood by those skilled in the art from the description of the present disclosure.

According to an embodiment, a method according to various embodiments of the present disclosure may be included and provided in a computer program product. The computer program product may be traded as a product between a seller and a buyer. The computer program product may be distributed in the form of a machine-readable storage medium (e.g., CD-ROM), or be distributed (e.g., downloaded or uploaded) online via an application store (e.g., PlayStore^{™}), or between two user devices (e.g., smart phones) directly. When distributed online, at least a part of the computer program product may be temporarily generated or at least temporarily stored in the machine-readable storage medium, such as memory of the manufacturer's server, a server of the application store, or a relay server.

Operations of all methods described herein can be performed in any suitable order unless otherwise indicated herein or otherwise clearly contradicted by context. The present disclosure is not necessarily limited according to the describing order of the operations. The use of all examples or exemplary terms (for example, or the like) in the present disclosure is to simply describe the present disclosure in detail, and unless the range of the present disclosure is not limited by the examples or the exemplary terms unless limited by the claims. Further, numerous modifications and adaptations will be readily apparent to one of ordinary skill in the art without departing from the spirit and scope of the present disclosure.

Therefore, it should be noted that the spirit of the present disclosure is not limited to the embodiments described above, and not only the claims to be described below, but also all ranges equivalent to or equivalently changed from the claims fall within the scope of the spirit of the present disclosure.

## Claims

1. A curve point extraction method, comprising:
receiving a power control requirement specification for controlling a grid-connected inverter from a server;
determining whether a required function included in the power control requirement specification is included in a preset function;
determining whether a number of candidate points included in the power control requirement specification satisfies a minimum number corresponding to the required function;
determining whether a range of the candidate points satisfies an allowable range of curve points corresponding to the required function; and
sorting the candidate points and extracting the curve points based on a curve point extraction algorithm corresponding to the required function.

2. The curve point extraction method of claim 1, wherein the preset function includes at least one of a first function that performs a control based on a relationship between a voltage and an active power, a second function that performs a control based on a relationship between the voltage and a reactive power, a third function that performs a control based on a relationship between the active power and the reactive power, and a fourth function that performs a control based on a grid abnormality related to the voltage or a frequency.

3. The curve point extraction method of claim 1, wherein the extracting of the curve points includes:
determining, as a first curve point, a candidate point having a lowest voltage among candidate points whose voltage falls within a first allowable level range, based on the required function being a first function that performs a control based on a relationship between a voltage and an active power;
determining, as a second curve point, a candidate point having a highest voltage among candidate points whose voltage falls within a second allowable level range; and
verifying whether a voltage value of the second curve point is greater than a voltage value of the first curve point.

4. The curve point extraction method of claim 1, comprising:
classifying the candidate points into a first group and a second group on the basis of a reference voltage, based on the required function being a second function that performs a control based on a relationship between a voltage and a reactive power;
individually sorting the candidate points included in the first group and the candidate points included in the second group based on reactive power;
determining a first curve point and a second curve point from among the candidate points included in the first group, based on a time point at which the reactive power changes; and
determining a third curve point and a fourth curve point from among the candidate points included in the second group, based on a time point at which the reactive power changes.

5. The curve point extraction method of claim 4, wherein the determining of the first curve point and the second curve point includes:
determining, as the first curve point, a candidate point included in the first group and located immediately before a first change in reactive power among the candidate points, which are sorted in descending order based on the reactive power; and
determining, as the second curve point, a candidate point included in the first group and located immediately before a first change in reactive power among the candidate points, which are sorted in ascending order based on the reactive power.

6. The curve point extraction method of claim 4, wherein the determining of the third curve point and the fourth curve point includes:
determining, as the third curve point, a candidate point included in the second group and located immediately before a first change in reactive power among the candidate points, which are sorted in descending order based on the reactive power; and
determining, as the fourth curve point, a candidate point included in the second group and located immediately before a first change in reactive power among the candidate points, which are sorted in ascending order based on the reactive power.

7. The curve point extraction method of claim 1, wherein the extracting of the curve points includes:
classifying the candidate points into a first group and a second group on the basis of a direction of active power generation or absorption, based on the required function being a third function that performs a control based on a relationship between an active power and a reactive power;
determining, from among the candidate points included in the first group, a candidate point having a smallest active power as a first curve point, and a candidate point having a largest active power as a third curve point;
determining, as a second curve point, a candidate point, among the candidate points included in the first group, that is located between the first curve point and the third curve point;
determining, from among the candidate points included in the second group, a candidate point having a largest active power as a fourth curve point, and a candidate point having a smallest active power as a sixth curve point; and
determining, as a fifth curve point, a candidate point, among the candidate points included in the second group, that is located between the fourth curve point and the sixth curve point.

8. The curve point extraction method of claim 7, wherein the determining of the second curve point includes, when there is one candidate point between the first curve point and the third curve point, determining the one candidate point as the second curve point.

9. The curve point extraction method of claim 7, wherein determining of the second curve point includes determining, as the second curve point, a candidate point having a largest reactive power among candidate points located between the first curve point and the third curve point.

10. The curve point extraction method of claim 7, wherein determining of the fifth curve point includes, when there is one candidate point between the fourth curve point and the sixth curve point, determining the one candidate point as the fifth curve point.

11. The curve point extraction method of claim 7, wherein determining of the fifth curve point includes determining, as the fifth curve point, a candidate point having a lowest reactive power among candidate points located between the fourth curve point and the sixth curve point.

12. The curve point extraction method of claim 1, comprising:
determining, as a second curve point, a candidate point having a lowest voltage or frequency among candidate points whose voltage or frequency falls within a second over-trip level range, based on the required function being included in a fourth function that performs a control based on a grid abnormality related to the voltage or frequency, and being a fifth function that performs a control based on an grid abnormality related to an overvoltage or overfrequency;
determining, as a fourth curve point, a candidate point having a lowest voltage or frequency among candidate points whose voltage or frequency falls within a first over-trip level range, wherein the voltage or frequency of the fourth curve point is less than the voltage or frequency of the second curve point, and a clearing time of the fourth curve point is greater than a clearing time of the second curve point;
determining, as a first curve point, a candidate point whose voltage or frequency is greater than or equal to the voltage or frequency of the second curve point and whose clearing time is equal to the clearing time of the second curve point among the candidate points;
determining, as a third curve point, a candidate point whose voltage or frequency is equal to the voltage or frequency of the second curve point and whose clearing time is equal to the clearing time of the fourth curve point among the candidate points; and
determining, as a fifth curve point, a candidate point whose voltage or frequency is equal to the voltage or frequency of the fourth curve point and whose clearing time is greater than or equal to the clearing time of the fourth curve point among the candidate points.

13. The curve point extraction method of claim 1, comprising:
determining, as a second curve point, a candidate point having a highest voltage or frequency among candidate points whose voltage or frequency falls within a second under-trip level range, based on the required function being included in a fourth function that performs a control based on a grid abnormality related to the voltage or frequency, and being a sixth function that performs a control based on a grid abnormality related to an undervoltage or underfrequency;
determining, as a fourth curve point, a candidate point having a highest voltage or frequency among candidate points whose voltage or frequency falls within a first under-trip level range, wherein the voltage or frequency of the fourth curve point is greater than the voltage or frequency of the second curve point, and a clearing time of the fourth curve point is greater than a clearing time of the second curve point;
determining, as a first curve point, a candidate point whose voltage or frequency is less than or equal to the voltage or frequency of the second curve point and whose clearing time is equal to the clearing time of the second curve point among the candidate points;
determining, as a third curve point, a candidate point whose voltage or frequency is equal to the voltage or frequency of the second curve point and whose clearing time is equal to the clearing time of the fourth curve point among the candidate points; and
determining, as a fifth curve point, a candidate point whose voltage or frequency is equal to the voltage or frequency of the fourth curve point and whose clearing time is greater than or equal to the clearing time of the fourth curve point among the candidate points.

14. A curve point extraction apparatus, comprising:
a memory in which at least one program is stored; and
a processor configured to operate by executing the at least one program,
wherein the processor is further configured to:
obtain a power control requirement specification for controlling a grid-connected inverter, which is received from a server;
determine whether a required function included in the power control requirement specification is included in a preset function;
determine whether a number of candidate points included in the power control requirement specification satisfies a minimum number corresponding to the required function;
determine whether a range of the candidate points satisfies an allowable range of curve points corresponding to the required function; and
sort the candidate points and extract the curve points based on a curve point extraction algorithm corresponding to the required function.

15. A computer-readable recording medium recorded thereon a program to cause a computer to execute the curve point extraction method of claim 1.
